# EUROPÄISCHE PATENTSCHRIFT

(11) **EP 0 478 752 B1**
(45) Veröffentlichungstag und Bekanntmachung des Hinweises auf die Patenterteilung: **05.07.1995**
(21) Anmeldenummer: 91908345.1
(22) Anmeldetag: 22.04.1991
(51) Int. Cl.: A61G 1/00, B63C 13/00

(54) **Rettungskapsel und ihre Verwendung zum Transport über Land**
Protective capsule and its use for transporting across country
Capsule de sauvetage et méthode de transporter sur terre

(30) Priorität: 23.04.1990 DE 4012922
(43) Veröffentlichungstag der Anmeldung: 08.04.1992
(73) Patentinhaber: Haro, Jürgen, 37627 Stadtoldendorf (DE)
(72) Erfinder: Haro, Jürgen, 37627 Stadtoldendorf (DE)
(74) Vertreter: Lins, Edgar, Dipl.-Phys. Dr.jur.
(86) Internationale Anmeldenummer: DE9100330
(87) Internationale Veröffentlichungsnummer: WO9116026

(56) Entgegenhaltungen:
- EP-A- 0 087 734
- WO-A-86/04312
- FR-A- 2 532 907
- US-A- 4 533 333
- US-A- 4 736 474

## Beschreibung

Die Erfindung betrifft eine Rettungskapsel bestehend aus
- einem aufblasbaren, mit erhöhten Randteilen versehenen, mit wenigstens einer Liege versehenen Boden, an dem Halterungen zum Festlegen wenigstens eines Verletzten befestigt sind,
- einem Dach- und Wandaufbau mit am Boden abgestützen Tragelementen, der zusammen mit dem Boden die geschlossene Kapsel bildet und in dem wenigstens eine verschließbare Öffnung angeordnet ist und
- einer an der Kapsel angebrachten Halterung für ihren Transport.

Die Erfindung betrifft ferner die Verwendung einer Rettungskapsel zum Transport Verletzter über Land.

Üblicherweise werden Verletzte mit Hilfe eines Krankenwagens oder eines Hubschraubers zu einer ärztlichen Versorgung, meist in ein Krankenhaus, transportiert, indem sie auf eine Trage gelegt und mit der Trage in dem betreffenden Fahrzeug transportiert werden. Dieses in vielen Fällen bewährte Transportverfahren weist in einigen Fällen jedoch erhebliche Nachteile auf. Die Bergung eines Verletzten aus einem unwegsamen Gelände, beispielsweise aus Bergnot, kann häufig nicht oder nur sehr umständlich erfolgen, weil der Verletzte häufig erst an einen Ort verbracht werden muß, an dem ein Hubschrauber landen oder an den ein Krankenwagen heranfahren kann. Gerade die häufig erforderliche schnelle Bergung eines Verletzten mit Hilfe eines Hubschraubers wird bei ungünstigen Wetterverhältnissen unmöglich gemacht, weil der Hubschrauber, beispielsweise bei dichtem Nebel, nicht landen kann. Das bekannte Verfahren stößt darüberhinaus bei Katastropheneinsätzen, bei denen eine Vielzahl von Verletzten versorgt und transportiert werden müssen, auf praktische Grenzen, so daß der Abtransport der Verletzten übermäßig lange Zeit in Anspruch nimmt, da es regelmäßig schwierig ist, eine Vielzahl von Krankenwagen innerhalb kürzerer Zeit an einen Ort zu konzentrieren, um die erforderlichen Tragen bereitzustellen, die benötigt werden, auch wenn ein Abtransport mit einem Hubschrauber erfolgen soll. Durch die lange Verweildauer von u.U. Schwerverletzten am Unfallort wird deren Überlebenschance z.T. entscheidend reduziert.

Durch EP-A-0 087 734 und US-A-4,533,333 sind Rettungsinseln für Schiffbrüchige bekannt, die aus aufblasbaren Schlauchanordnungen bestehen und nach oben hin schließbar sind, so daß die Schiffbrüchigen gegen Wetter- und Wassereinflüsse geschützt sind. Eine derartige Rettungsinsel kann mit einer Aufnahme für einen Rettungshaken eines Hubschraubers versehen sein und somit mit Hilfe des Hubschraubers direkt aus dem Wasser geborgen und abtransportiert werden. Die Rettungsinseln sind für den Transport von Verletzten von Land und/oder zum Absetzen an Land weder vorgesehen noch gefahrlos geeignet.

Durch US-A-4,736,474 ist eine aufblasbare Transportliege bekannt, auf der ein Verletzter mit Hilfe von Riemen usw. festgeschnallt werden kann.

Ausgehend von der Problemstellung, einen verbesserten Transport Verletzter oder Hilfloser an Land zu ermöglichen, wird erfindungsgemäß eine durch Aufblasen aufrichtbare, rundum schließbare Kapsel mit einem Boden und einer Dach- und Wandkonstruktion, in die wenigstens eine Person einbringbar und unter Verwendung einer an der Kapsel befindlichen Halterung abtransportierbar ist, zum Transport Verletzter über Land verwendet, wobei der Verletzte auf einer auf dem Boden ausgebildeten Liege gelagert und festgelegt wird, und der Boden mit einem Schockabsorptionssystem versehen worden ist.

Erfindungsgemäß werden somit für den Transport Verletzter von Land und zum Absetzen auf Land geschlossene Rettungskapseln verwendet, die so ausgebildet sind, daß die Lagerung der Verletzten unmittelbar auf dem aufblasbaren Boden der Kapsel erfolgen kann. Der Abtransport des/der Verletzten erfolgt zusammen mit dem Transport der Kapsel, vorzugsweise in einer hängenden Position der Kapsel, bespielsweise unter einem Hubschrauber. Ein umständliches Einladen der Verletzten in einen Hubschrauber kann daher entfallen. Der Abtransport ist - ggfs. über relativ lange Seile - auch möglich, wenn der Hubschrauber wegen einer schlechten Sicht nicht landen kann, da die Aufnahme der Rettungskapsel nicht an die Landung des Hubschraubers gebunden ist. Die Verbindung mit einer vorzugsweise automatischen Aufhängevorrichtung der Rettungskapsel kann über eine Länge von 20 oder 30 m ohne Schwierigkeiten erfolgen. Für den Transport wird die Kapsel über eine am Hubschrauber vorhandene Winde auf einen geeigneten Abstand zum Hubschrauber gezogen.

Die erfindungsgemäße Verwendung bringt eine Vielzahl von Vorteilen mit sich. Die verwendeten Rettungskapseln können auf vergleichbar kleinem Raum in stabilen Behältern und ggfs. an Orten, an denen eine Vielzahl von Menschen zusammenkommen, wie beispielsweise in Fußballstadien, auf Autorennbahnen, Flugveranstaltungen usw., als vorsorgliche Maßnahme auf Vorrat gehalten werden. Darüberhinaus lassen sich die Rettungskapseln mit stabilen Behältern notfalls auch vom Hubschrauber aus abwerfen, so daß im Falle einer Katastrophe mit einer Vielzahl von Verletzten sehr schnell eine Vielzahl von Rettungskapseln herangeschafft werden und die Verletzten von Helfern in die Rettungskapseln gelegt werden können. Da die Rettungskapseln auch eine Mehrzahl von Verletzten, beispielsweise zwei oder vier, aufnehmen können, kann der Abtransport der Verletzten schnellstens erfolgen. Die Verletzten bleiben dabei in der Kapsel und können gegebenenfalls durch einen Arzt in der Kapsel erstversorgt werden. Während des Transports befindet sich der Verletzte in einer weitgehend sterilen Umgebung in der Kapsel und braucht nicht mehrfach umgelagert zu werden. Die Innenausstattung einer solchen Rettungskapsel kann für die verschiedensten Einsatzfälle bereits vorbereitet sein, um beispielsweise Transfusionen, Reanimationen usw. vornehmen zu können. Es ist auch denkbar, Rettungskapseln für verschiedene Einsatzfälle, beispielsweise für Verbrennungen, Reanimationen o.ä. speziell auszustatten, so daß der erstversorgende Arzt optimale Gerätschaften vorfindet und die entsprechenden Handlungen während des Transports in der Rettungskapsel unternehmen kann.

Der Transport der Verletzten in der Rettungskapsel ist schonend möglich, da der aufgeblasene Boden für eine gute Federung sorgt und der Verletzte durch spezielle Luftpolster in geeigneter Weise abgestützt und durch Gurte und Klettverschlüsse o.ä. gesichert werden kann.

Selbstverständlich ist es möglich, die Rettungskapseln auch in anderer Form als mit Hubschraubern zu transportieren, beispielsweise durch Landfahrzeuge oder durch andere Luftfahrzeuge.

Eine für den Transport an Land verwendbare Rettungskapsel besteht aus
- einem aufblasbaren, mit erhöhten Randteilen versehenen, mit wenigstens einer Liege versehenen Boden, an dem Halterungen zum Festlegen wenigstens eines Verletzten befestigt sind,
- einem Dach- und Wandaufbau mit am Boden abgestützen Tragelementen, der zusammen mit dem Boden die geschlossene Kapsel bildet und in dem wenigstens eine verschließbare Öffnung angeordnet ist und
- einer an der Kapsel angebrachten Halterung für ihren Transport
und ist dadurch gekennzeichnet, daß das erhöhte Randteil des Bodens eine erste, die Stabilität bestimmende Schlauchanordnung aufweist und mit einem unter den Boden ragenden Schockabsorptionssystem verbunden ist, das unter dem Gewicht der Rettungskapsel zusammendrückbar ist.

Vorzugsweise sind die erhöhten Randteile des Bodens durch einen umlaufenden Schlauch gebildet, dessen Durchmesser die Höhe des Bodens weit übersteigt. Der Boden kann vorzugsweise eine vieleckige Form aufweisen, wobei eine rechteckige Rundform durch abgeschrägte Ecken ergänzt wird, um eine im wesentlichen rechteckige Lagerfläche für Verletzte zu erhalten.

Der Dach- und Wandaufbau ist vorzugsweise bogenförmig ausgebildet und weist mittig einen höchsten Punkt auf, an dem die Halterung für die Kapsel angeordnet sein kann. Die Tragelemente des Dach- und Wandaufbaus können ebenfalls aufblasbar, jedoch auch durch biegbare, elastische Stäbe, Gurte o.ä. gebildet sein.

Der Boden kann aus einer Vielzahl von Kammern bestehen, um bei einer Zerstörung einer Kammer den aufgeblasenen Zustand des Bodens insgesamt zu erhalten.

Zweckmäßigerweise kann die Rettungskapsel eine Aufblasautomatik zum automatischen Aufblasen aller aufblasbaren Teile nach Betätigung eines Auslösemechanismus versehen sein. Die dabei aufgeblasenen Teile sind diejenigen, die für die Stabilität der Kapsel verantwortlich sind.

Vorzugsweise weist der Boden eingeformte Liegen mit wahlweise aufblasbaren Stützkeilen zur Einstellung unterschiedlicher Neigungen von Oberkörper und gegebenenfalls Unterkörper des Verletzten auf. Die wahlweise aufblasbaren Stützkeile werden zweckmäßigerweise mit einem fest eingebauten Hand-Pumpmechanismus aufgeblasen. Je nach Art der Verletzung kann dabei eine fachmännische Lagerung des Verletzten besorgt werden.

Die Rettungskapsel weist vorzugsweise Halterungen für Erstversorgungsmaterialien und -geräte auf, wobei - wie bereits erwähnt - Spezialisierungen für bestimmte Katastrophenfälle möglich sind.

Die Wandungen der Rettungskapsel sind vorzugsweise mit Isolationsmaterial ausgekleidet.

Um ein Ausbeulen des aufgeblasenen Bodens, das eine stabile Lagerung des/der Verletzten beeinträchtigen könnte, zu verhindern, kann der aufblasbare Boden aus zwei parallelen Lagen und dazwischen angeordnetem Abstandsgewebe bestehen. Das in die beiden parallelen einvulkanisierte Abstandsgewebe sorgt dafür, daß die beiden Lagen im wesentlichen parallel zueinander gehalten werden, so daß eine relative Ausbeulung des Bodens verhindert wird.

Die Öffnung der Kapsel, durch die die Verletzten in den Innenraum gebracht werden können, kann zweckmäßigerweise durch Klettverschlüsse, Reißverschlüsse o.ä. erfolgen.

In einer bevorzugten Ausführungsform der erfindungsgemäßen Rettungskapsel ist das Schockabsorptionssystem dadurch realisiert, daß das erhöhte Randteil des Bodens einen weiteren Schlauch größeren Durchmessers aufweist, der mit einem nur geringen Überdruck aufgeblasen und unter dem Gewicht der Rettungskapsel weitgehend zusammendrückbar ist bzw. zur Seite drückbar ist. Mit einem derartigen zweiten Schlauch, der den ersten Schlauch vorzugsweise nach unten und seitlich nach außen umgibt und somit mit dem ersten Schlauch eine Doppelschlauchanordnung bildet, ist ein wirksames Schockabsorptionssystem realisierbar, das erlaubt, die Rettungskapsel mit dem Hubschrauber auf Land auch unsanfter abzusetzen und eine Gefährdung der geborgenen Verletzten auch dann auszuschließen, wenn die Rettungskapsel aus einer geringen Höhe (bis zu 3 m) im freien Fall abgeworfen werden muß.

Aus Stabilitätsgründen kann es zweckmäßig sein, das erhöhte Randteil mit zwei übereinander angeordneten die Stabilität bestimmenden Schläuchen mit im wesentlichen gleichem Durchmesser auszubilden, die miteinander verbunden sind und von denen der obere Schlauch den Dach- und Wandaufbau und der untere Schlauch den Boden trägt.

Die durch den mit nur geringem Überdruck aufgepumpten Schlauch realisierte Schockabsorption kann noch dadurch verbessert werden, daß unterhalb des Bodens und des zweiten Schlauches eine überdrucklose Kammer mit einer flexiblen Wand ausgebildet ist, die mit einer Vielzahl von Luftauslaßöffnungen versehen ist, die ein schnelles Entweichen der in der Kammer eingeschlossenen Luft unter dem Gewicht der Rettungskapsel erlauben. Die überdrucklose Kammer soll also beim Aufsetzen der Rettungskapsel in kürzester Zeit zusammendrückbar sein, so daß die Rettungskapsel stabil auf den die Stabilität bestimmenden Schläuchen aufsetzbar ist. Durch das Entweichen der Luft durch die Luftauslaßöffnungen der überdrucklosen Kammer wird aber eine gewisse zusätzliche Stoßabsorption erreicht.

Die flexible Wand der überdrucklosen Kammer ist vorzugsweise konvex gewölbt ausgebildet. Diese Form der Wand kann durch eine Beschwerung der Wand oder durch entsprechende Verstärkungseinlagen erreicht und während des Transports der Rettungskapsel aufrechterhalten werden.

Die Ausbildung der Rettungskapsel mit, mit höherem Überdruck aufgepumpten, die Stabilität bestimmenden Schläuchen und wenigstens einem Stoßabsorptionsschlauch, der mit einem geringen Druck aufgeblasen ist, erlaubt eine einfache Konstruktion, ein automatisches Aufblasen der Rettungskapsel und einen sicheren Transport der Verletzten auch für den Fall, daß die Rettungskapsel unter einem Hubschrauber hängend transportiert wird.

Ein Ausführungsbeispiel der Erfindung ist in der Zeichnung dargestellt und soll im folgenden erläutert werden. Es zeigen:
- Figur 1: einen Vertikalschnitt durch eine geschlossene Rettungskapsel, dargestellt ohne erfindungsgemäßes Schockabsorptionssystem
- Figur 2: eine Draufsicht auf den Boden einer Rettungskapsel für zwei Personen
- Figur 3: eine Draufsicht auf den Boden einer Rettungskapsel für vier Personen.
- Figur 4: eine Draufsicht auf eine andere Ausführungsform einer Rettungskapsel für drei Personen
- Figur 5: eine Ansicht der Längsseite der Rettungskapsel gemäß Figur 4
- Figur 6: eine Ansicht auf die schmale Stirnseite der Rettungskapsel gemäß Figur 4
- Figur 7: einen Schnitt entlang der Linie A-A in Figur 5

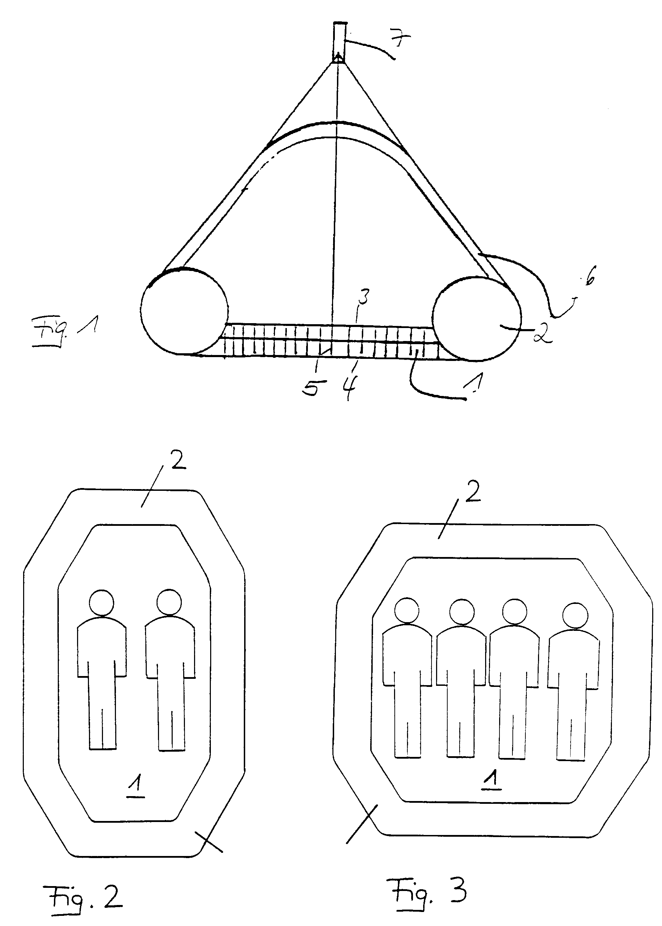

Figur 1 läßt einen aufgeblasenen Boden 1 erkennen, der von einem umlaufenden, einen Randwulst bildenden Luftschlauch 2 umgeben ist. Der Boden 1 kann aus mehreren Kammern bestehen und ist aus wenigstens zwei parallelen Lagen 3, 4 gebildet, die durch Abstandsgewebe 5 miteinander verbunden sind und so unter Vermeidung von Auswölbungen parallel zueinander gehalten werden.

Der Durchmesser des umlaufenden Luftschlauchs 2 ist mehr als doppelt so groß wie die Höhe des Bodens 1.

Am umlaufenden Luftschlauch 2 stützen sich bogenförmig nach oben gewölbte Luftschläuche ab, die Tragelemente 6 für eine Dach- und Wandkonstruktion darstellen. Die Tragelemente 6 können durch einfache, ggfs. mit Isolierschichten versehene Wandlagen verbunden sein.

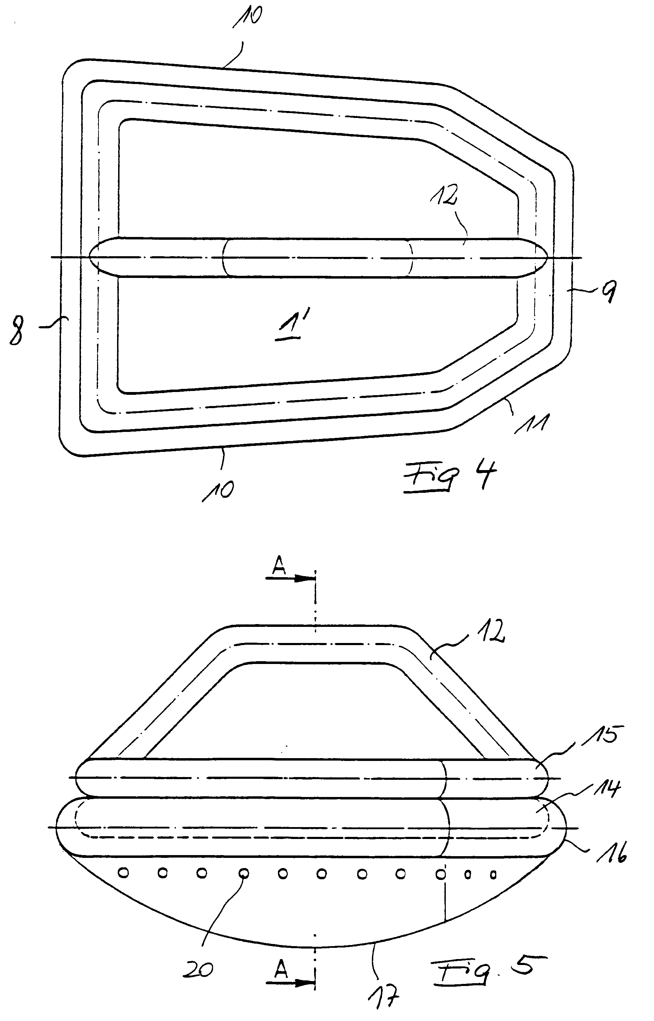

Die Tragelemente 6 lagern eine Halterung 7, an der die geschlossene Kapsel aufhängbar und in aufgehängter Form transportierbar ist. Fin erfindungsgemäß vorgesehenes Schockabsorptionssystem ist in Figur 1 nicht dargestellt und entspricht den unten in den Figuren 4 und 5 bzw. 6 und 7 dargestellten Varianten.

Die Figuren 2 und 3 zeigen eine Draufsicht auf die Böden 1 zweier Ausführungsformen, wobei der Boden 1 in Figur 2 - wie angedeutet - für zwei Personen und der Boden 1 gemäß Figur 3 für vier Personen ausgebildet ist. In beiden Fällen ist der Boden 1 im wesentlichen rechteckig ausgebildet, jedoch mit abgeschrägten Ecken versehen, so daß sich in beiden Fällen eine im wesentlichen achteckige Form des Bodens 1 ergibt.

Figur 4 zeigt eine Draufsicht auf eine andere Ausführungsform der Rettungskapsel, die zur Aufnahme von drei Personen geeignet ist. Der Boden 1' dieser Rettungskapsel weist eine lange Stirnseite 8 und eine schmale Stirnseite 9 auf. Zwei Längsseiten 10 verlaufen zunächst schwach konisch aufeinander zu und bilden kurz vor der schmalen Stirnseite 9 stärker abgewinkelte Abschnitte 11, um den Übergang zur schmalen Stirnseite 9 herzustellen.

Die Figuren 4 bis 7 lassen erkennen, daß ein bogenförmig geformter Schlauch 12 die Stütze für aus Planen gebildete schräge Dachwände 13 bilden.

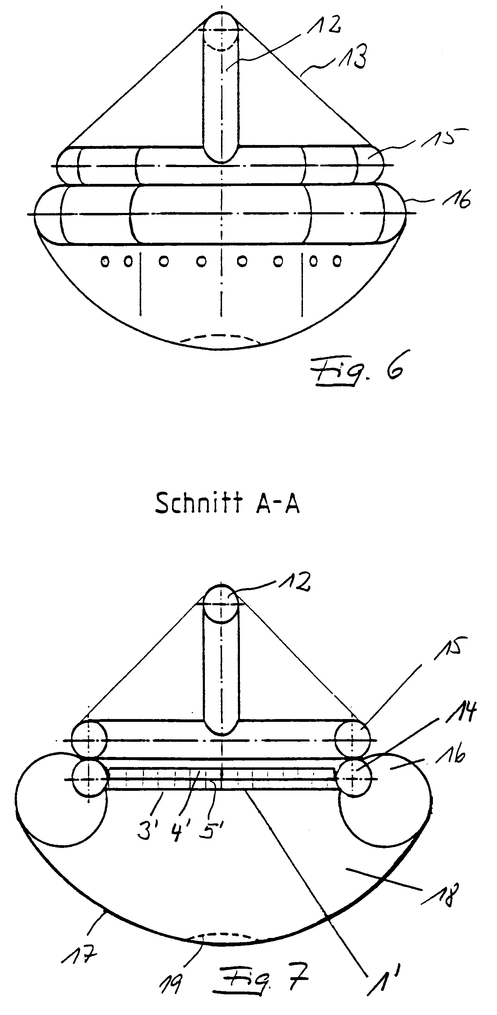

Der Boden 1' ist in dem in Figur 4 bis 7 dargestellten Ausführungsbeispiel von mehreren Luftschläuchen 14, 15, 16 umgeben. Der Boden 1' wird - wie Figur 7 zeigt - aus zwei parallelen Lagen 3', 4' gebildet, die durch Abstandsgewebe 5' miteinander verbunden sind. Der Boden ist mit einem relativ hohen Überdruck von 0,5 bis 1 bar aufgepumpt und dadurch relativ hart ausgebildet. Er wird von einem ersten Luftschlauch 14 umgeben und gehalten. Der Luftschlauch 14 weist einen relativ kleinen, jedoch gegenüber dem Boden 1' einen Randwulst ausbildenden Querschnitt auf. Auf diesem ersten Schlauch 14 ist ein zweiter Schlauch 15 befestigt, der gleiche Abmessungen und einen gleichen Querschnitt hat. Der zweite Schlauch 15 ist mit dem gewölbt ausgebildeten Schlauch 12 verbunden. Die Schläuche 12, 14, 15 sind mit einem relativ hohen Überdruck zwischen 0,5 und 1 bar aufgepumpt. Der erste Schlauch 14 ist von einem dritten Schlauch 16 mit einem wesentlich größeren Querschnittsdurchmesser umgeben, wobei sich der den ersten Schlauch 14 überragende Teil des dritten Schlauchs 16 nach unten und radial außen vom ersten Schlauch 14 aus erstreckt. Der dritte Schlauch 16 weist einen mindestens doppelt so großen Durchmesser wie der erste Schlauch 14 auf, ist aber nur mit einem geringen Überdruck in der Größenordnung von 0,05 bis 0,1 bar aufgepumpt.

An die außenliegenden Seiten des dritten Schlauchs 16 schließt sich nach unten eine konvex gewölbte Wand 17 an, die eine überdrucklose Kammer 18 mit dem dritten Schlauch 16 bzw. dem Boden 1' bildet. Um die konvexe Wölbung der Wand 17, die wegen des fehlenden Überdrucks in der Kammer 18 nur aufgrund des Gewichts der flexiblen Wand 17 bzw. deren Vorformung entstehen muß, zu gewährleisten und beim Transport der Rettungskapsel beizubehalten, kann es zweckmäßig sein, im unteren Mittelpunkt der flexiblen Wand 17 eine Beschwerung 19, beispielsweise in Form einer Bleikette, vorzusehen. Dicht unterhalb des dritten Schlauchs 16 weist die Wand 17 Luftaustrittsöffnungen 20 auf, die ein schnelles Entweichen der Luft aus der Kammer 18 ermöglichen. Weitere Luftaustrittsöffnungen für die Kammer 18 können im Boden 1' vorgesehen sein. Sollten diese Luftaustrittsöffnungen 20 nicht ausreichen, können zusätzliche Luftaustrittsöffnungen vorgesehen werden.

Die Stabilität der in den Figuren 4 bis 7 dargestellten Rettungskapsel ergibt sich ausschließlich aus den stark aufgepumpten Schläuchen 14, 15, 12 und dem entsprechend aufgepumpten Boden 1'.

Der dritte Schlauch 16, der mit dem ersten Schlauch 14 eine Doppelschlauchanordnung bildet, dient der Schockabsorption für den Fall, daß die am Hubschrauber hängende Rettungskapsel beabsichtigt oder unbeabsichtigt aus einer geringen Höhe (max. etwa 3 m) auf den Boden fällt. Dies kann unbeabsichtigt dann passieren, wenn der Hubschrauber wegen Luftturbulenzen durchsackt. Durch das Gewicht der Rettungskapsel wird der dritte Schlauch 16 mit seinem relativ geringen Überdruck zusammengepreßt bzw. entweicht nach oben, so daß die Kapsel letztendlich mit dem ersten umlaufenden Schlauch 14 und dem Boden 1' zur Auflage auf den Erdboden gelangt. Der dritte Schlauch 16 hat somit ausschließlich die Funktion, einen Aufprall der Kapsel auf den Erdboden zu dämpfen.

Die stoßabsorbierende Dämpfung des dritten Schlauchs 16 wird durch die Ausbildung einer drucklosen Luftkammer 18 auf der Unterseite der Rettungskapsel noch verstärkt. Das Aufsetzen der Kapsel mit dem umlaufenden ersten Schlauch 14 und dem Boden 1' wird geringfügig verzögert durch die aus der Kammer 18 durch die Luftaustrittsöffnungen 20 entweichende Luft. Etwaige in die flexible Wand 17 eingebrachte formgebende Verstärkungen müssen dabei so ausgebildet sein, daß sie unter dem Gewicht der Kapsel sofort nachgeben und das Flachlegen der flexiblen Wand 17 unter dem Boden 1' innerhalb kürzester Zeit ermöglichen. Der Luftaustritt durch die Luftaustrittsöffnungen 20 muß so schnell erfolgen, daß die Kapsel beim Auftreffen auf den Erdboden zwar stoßgedämpft, jedoch nicht instabil abgefedert wird, wobei sie umkippen könnte.

Die gemäß den Figuren 4 bis 7 ausgebildete Rettungskapsel erlaubt daher eine wirksame Stoßabsorption auch bei einem nicht lotrechten Auftreffen der Kapsel auf den Erdboden. Der mit nur geringem Überdruck aufgepumpte, seitlich vorstehende dritte Schlauch 16 sorgt dafür, daß ein seitliches Anstoßen der Rettungskapsel wirksam gedämpft wird, so daß ein sicherer Transport von Verletzten mit der Rettungskapsel - auch unter einem Hubschrauber hängend - möglich ist.

Die aus Figur 4 ersichtliche Formgebung des Bodens 1' der Rettungskapsel erlaubt den Transport dieser Kapsel im aufgepumpten Zustand auf einem Lkw, falls dies zweckmäßig sein sollte. Die Form der Rettungskapsel legt nahe, zwei Personen mit dem Kopf zur breiten Stirnseite 8 und eine Person in umgekehrter Richtung auf dem Boden 1' anzuordnen. Im jeweiligen Fußbereich können in den Boden 1' Öffnungen in den beiden Lagen 3', 4' und im Abstandsgewebe 5' angeordnet sein, um die Entlüftung der Kammer 18 in gezielter und gegebenenfalls lastabhängiger Weise zu ermöglichen. Gegebenenfalls müssen Entlüftungsöffnungen in den Wänden 13 vorgesehen werden.

Besonders zweckmäßig ist es, wenn auf den Boden 1' Krankentragen gelegt werden, die ebenfalls aus einem aufgepumpten Abstandsgewebe gebildet sind. Die für den Verletzten wirksame, durch den Boden 1' bewirkte Stoßdämpfung wird durch die Krankenliegen noch verbessert. Dies gilt insbesondere dann, wenn durch ein Absetzen der Rettungskapsel auf einem Erdboden, aus dem spitze Gegenstände hervorragen, der Boden 1' teilweise beschädigt werden sollte. Die Krankentragen können so geformt sein, daß sie in der für die betreffende Rettungskapsel vorgesehenen Anzahl einen vollständigen zweiten Boden bilden.

Es ist erkennbar, daß das Konzept der geschlossenen Rettungskapsel für den Transport von Verletzten erhebliche Vorteile und völlig neue Versorgungsmöglichkeiten bietet.

## Patentansprüche

1. Verwendung einer durch Aufblasen aufrichtbaren, rundum schließbaren Kapsel mit einem aufblasbaren Boden und einer Dach- und Wandkonstruktion, in die wenigstens eine Person einbringbar und unter Verwendung einer an der Kapsel befindlichen Halterung abtransportierbar ist, zum Transport Verletzter über Land, wobei der Verletzte auf einem wenigstens eine Liege bildenden Boden gelagert und festgelegt wird und der Boden mit einem Schockabsorptionssystem versehen worden ist.

2. Verwendung einer durch Aufblasen aufrichtbaren, rundum schließbaren Kapsel mit einem aufblasbaren Boden und einer Dach- und Wandkonstruktion, in die wenigstens eine Person einbringbar und unter Verwendung einer an der Kapsel befindlichen Halterung abtransportierbar ist, zum Transport Verletzter über Land, wobei der Verletzte auf wenigstens einer auf den Boden gelegten Liege gelagert und festgelegt wird und der Boden mit einem Schockabsorptionssystem versehen worden ist.

3. Verwendung nach Anspruch 1 oder 2, wobei die aufgerichtete Kapsel zum Abtransport an ihrer Oberseite ergriffen und hängend transportiert wird.

4. Rettungskapsel bestehend aus
- einem aufblasbaren, mit einem erhöhten Randteil (2) versehenen, wenigstens eine Liege bildenden Boden (1), an dem Halterungen zum Festlegen wenigstens eines Verletzten befestigt sind,
- einem Dach- und Wandaufbau mit am Boden (1) abgestützen Tragelementen (6), der zusammen mit dem Boden (1) die geschlossene Kapsel bildet und in dem wenigstens eine verschließbare Öffnung angeordnet ist und
- einer an der Kapsel angebrachten Halterung (7) für ihren Transport,
dadurch gekennzeichnet, daß das erhöhte Randteil des Bodens (1, 1') eine die Stabilität bestimmende Schlauchanordnung (14, 15) aufweist und mit einem unter den Boden (1, 1') ragenden Schockabsorptionssystem verbunden ist, das unter dem Gewicht der Rettungskapsel zusammendrückbar ist.

5. Rettungskapsel bestehend aus
- einem aufblasbaren, mit einem erhöhten Randteil (2) versehenen Boden (1), auf den wenigstens eine Liege gelegt ist und an dem Halterungen zum Festlegen wenigstens eines Verletzten befestigt sind,
- einem Dach- und Wandaufbau mit am Boden (1) abgestützen Tragelementen (6), der zusammen mit dem Boden (1) die geschlossene Kapsel bildet und in dem wenigstens eine verschließbare Öffnung angeordnet ist und
- einer an der Kapsel angebrachten Halterung (7) für ihren Transport,
dadurch gekennzeichnet, daß das erhöhte Randteil des Bodens (1, 1') eine die Stabilität bestimmende Schlauchanordnung (14, 15) aufweist und mit einem unter den Boden (1, 1') ragenden Schockabsorptionssystem verbunden ist, das unter dem Gewicht der Rettungskapsel zusammendrückbar ist.

6. Rettungskapsel nach Anspruch 4 oder 5, dadurch gekennzeichnet, daß das erhöhte Randteil des Bodens (1, 1') einen weiteren Schlauch (16) größeren Durchmessers aufweist, der mit einem nur geringen Überdruck aufgeblasen und unter dem Gewicht der Rettungskapsel weitgehend zusammendrückbar ist.

7. Rettungskapsel nach Anspruch 5 oder 6, dadurch gekennzeichnet, daß der weitere Schlauch (16) die Schlauchanordnung (14, 15) nach unten und seitlich nach außen umgibt.

8. Rettungskapsel nach einem der Ansprüche 4 bis 7, dadurch gekennzeichnet, daß die Halterung (7) an der Oberseite der Kapsel für ihren hängenden Transport angeordnet ist.

9. Rettungskapsel nach einem der Ansprüche 4 bis 8, dadurch gekennzeichnet, daß die erhöhten Randteile (2) des Bodens (1) durch einen umlaufenden Schlauch gebildet sind, dessen Durchmesser die Höhe des Bodens (1) weit übersteigt.

10. Rettungskapsel nach einem der Ansprüche 4 bis 9, dadurch gekennzeichnet, daß der Boden (1) eine vieleckige Form aufweist.

11. Rettungskapsel nach einem der Ansprüche 4 bis 10, dadurch gekennzeichnet, daß der Dach- und Wandaufbau bogenförmig ausgebildet ist und mittig einen höchsten Punkt aufweist.

12. Rettungskapsel nach einem der Ansprüche 4 bis 11, dadurch gekennzeichnet, daß die Tragelemente (6) des Dach- und Wandaufbaus aufblasbar sind.

13. Rettungskapsel nach einem der Ansprüche 4 bis 12, dadurch gekennzeichnet, daß der Boden (1) aus einer Vielzahl von Kammern besteht.

14. Rettungskapsel nach einem der Ansprüche 4 bis 13, gekennzeichnet durch eine Aufblasautomatik zum automatischen Aufblasen aller aufblasbaren Teile nach Betätigung eines Auslösemechanismus.

15. Rettungskapsel nach einem der Ansprüche 4 bis 14, gekennzeichnet durch in dem Boden eingeformte Liegen mit wahlweise aufblasbaren Stützkeilen zur Einstellung unterschiedlicher Neigungen von Oberkörper und ggfs. Unterkörper des/der Verletzten.

16. Rettungskapsel nach einem der Ansprüche 4 bis 15, gekennzeichnet durch Halterungen für Erstversorgungsmaterialien und -geräte.

17. Rettungskapsel nach Anspruch 16, dadurch gekennzeichnet, daß die enthaltenen Erstversorgungsmaterialien und ggfs. Lagerungsmöglichkeiten auf spezielle Einsatzfälle abgestimmt sind.

18. Rettungskapsel nach einem der Ansprüche 4 bis 17, dadurch gekennzeichnet, daß die Wandungen mit Isolationsmaterial ausgekleidet sind.

19. Rettungskapsel nach einem der Ansprüche 4 bis 18, gekennzeichnet durch einen aufblasbaren Boden (1), der aus zwei parallelen Lagen (3, 4) und dazwischen angeordnetem Abstandsgewebe (5) besteht.

20. Rettungskapsel nach einem der Ansprüche 4 bis 19, dadurch gekennzeichnet, daß sie vor dem Aufrichten in einem verschlossenen eigenen Behälter im zusammengelegten Zustand verstaut ist.

21. Rettungskapsel nach einem der Ansprüche 4 bis 20, dadurch gekennzeichnet, daß die die Stabilität bestimmende Schlauchanordnung durch zwei übereinander angeordnete Schläuche (14, 15) mit im wesentlichen gleichen Durchmesser gebildet ist, wobei die Schläuche (14, 15) miteinander verbunden sind und wobei der obere Schlauch (15) den Dach- und Wandaufbau (12 und 13) und der untere Schlauch (14) den Boden (1') trägt.

22. Rettungskapsel nach einem der Ansprüche 4 bis 21, dadurch gekennzeichnet, daß unterhalb des Bodens (1') und der Schlauchanordnung (14, 15) eine überdrucklose Kammer (18) mit einer flexiblen Wand (17) ausgebildet ist, die mit einer Vielzahl von Luftauslaßöffnungen (20) versehen ist, die ein schnelles Entweichen der in der Kammer (18) eingeschlossenen Luft unter dem Gewicht der Rettungskapsel erlauben.

23. Rettungskapsel nach Anspruch 22, dadurch gekennzeichnet, daß die Wand (17) der Kammer (18) an deren Unterseite mit einem Gewicht (19) beschwert ist.

24. Rettungskapsel nach Anspruch 22 oder 23, dadurch gekennzeichnet, daß die Wand (17) der Kammer (18) die Form im drucklosen Zustand aufrecht erhaltende Verstärkungeinlagen aufweist.

25. Rettungskapsel nach einem der Ansprüche 4 bis 24, dadurch gekennzeichnet, daß die Stabilität bestimmende Schläuche (14, 15, 12) mit einem Überdruck von 0,5 bis 1 bar aufgeblasen ist.

26. Rettungskapsel nach einem der Ansprüche 6 bis 21, dadurch gekennzeichnet, daß der weitere Schlauch (16) mit einem Überdruck von 0,05 bis 0,1 bar aufgeblasen ist.

## Claims

1. Use of a capsule erectable by inflation and closable on all sides, which capsule comprises an inflatable floor and a roof and wall structure, in which at least one person can be accommodated and transported using a holding means on the capsule, for the transportation of injured persons overland, whereby the injured person is laid down on the floor forming at least one berth and secured in position, and the floor is provided with a shock absorbing system.

2. Use of a capsule erectable by inflation and closable on all sides, which capsule comprises an inflatable floor and a roof and wall structure, in which at least one person can be accommodated and transported using a holding means on the capsule, for the transportation of injured persons overland, whereby the injured person is laid down on a berth of which at least one is placed on the floor and secured in position, and the floor is provided with a shock absorbing system.

3. Use according to claim 1 or 2, whereby the erected capsule is gripped at its top for transportation and is transported in suspended position.

4. Rescue capsule comprising
- an inflatable floor (1) provided with a raised wall section (2) and forming at least one berth, to which holding means are attached for securing at least one injured person in position,
- a roof and wall structure having supporting members (6) supported against the floor (1), which together with the floor (1) forms the closed capsule and in which at least one closable opening is arranged, and
- a holding means (7) attached to the capsule for its transport,
characterised in that the raised wall section of the floor (1, 1') has a stability-determining tube arrangement (14, 15) and is connected with a shock absorbing system extending beneath the floor (1, 1') which is compressible under the weight of the rescue capsule.

5. Rescue capsule comprising
- an inflatable floor (1) having a raised wall section (2), on which is placed at least one berth and to which holding means are attached for securing at least one injured person in position,
- a roof and wall structure having supporting members (6) supported against the floor (1), which together with the floor (1) forms the closed capsule and in which at least one closable opening is arranged, and
- a holding means (7) attached to the capsule for its transport,
characterised in that the raised wall section of the floor (1, 1') has a stability-determining tube arrangement (14, 15) and is connected with a shock absorbing system extending beneath the floor (1, 1') which is compressible under the weight of the rescue capsule.

6. Rescue capsule according to claim 4 or 5, characterised in that the raised wall section of floor (1, 1') has a further tube (16) of larger diameter, which is inflated at only a slight overpressure and is substantially compressible under the weight of the rescue capsule.

7. Rescue capsule according to claim 5 or 6, characterised in that the further tube (16) surrounds the tube arrangement (14, 15) in a downward and laterally outward direction.

8. Rescue capsule according to one of claims 4 to 7, characterised in that the holding means (7) is arranged at the top of the capsule for its suspended transport.

9. Rescue capsule according to one of claims 4 to 8, characterised in that the raised wall sections (2) of floor (1) are formed by a circumferential tube the diameter of which far exceeds the height of the floor (1).

10. Rescue capsule according to one of claims 4 to 9, characterised in that the floor (1) is of a polygonal shape.

11. Rescue capsule according to one of claims 4 to 10, characterised in that the roof and wall structure is arched with a highest point provided in the centre.

12. Rescue capsule according to one of claims 4 to 11, characterised in that the supporting members (6) of the roof and wall structure are inflatable.

13. Rescue capsule according to one of claims 4 to 12, characterised in that the floor (1) consists of a plurality of compartments.

14. Rescue capsule according to one of claims 4 to 13, characterised by an automatic inflating system for automatic inflation of all inflatable parts after operating a trigger mechanism.

15. Rescue capsule according to one of claims 4 to 14, characterised by berths formed in the floor with optionally inflatable support wedges for setting different angle positions for the upper body and, if necessary, the lower body of the injured person(s).

16. Rescue capsule according to one of claims 4 to 15, characterised by holding means for first aid materials and appliances.

17. Rescue capsule according to claim 16, characterised in that the included first aid materials and, if necessary, storage facilities are adapted to suit specific uses.

18. Rescue capsule according to one of claims 4 to 17, characterised in that the walls are lined with insulating material.

19. Rescue capsule according to one of claims 4 to 18, characterised by an inflatable floor (1), which consists of two parallel layers (3, 4) and a spacing fabric (5) arranged in between the layers.

20. Rescue capsule according to one of claims 4 to 19, characterised in that it is stored in a collapsed state in its own closed container prior to being erected.

21. Rescue capsule according to one of claims 4 to 20, characterised in that the stability-determining tube arrangement is formed from two tubes (14, 15) of essentially equal diameter arranged one above the other, whereby the tubes are connected with each other and whereby the upper tube (15) carries the roof and wall structure (12 and 13) and the lower tube (14) carries the floor (1').

22. Rescue capsule according to one of claims 4 to 21, characterised in that a non-pressurised chamber (18) with a flexible wall (17) is arranged beneath the floor (1') and the tube arrangement (14, 15), which chamber is provided with a plurality of air outlet openings (20), which allow the air enclosed in the chamber (18) to escape quickly under the weight of the rescue capsule.

23. Rescue capsule according to claim 22, characterised in that the wall (17) of chamber (18) is weighed down by a weight (19) on its underside.

24. Rescue capsule according to claim 22 or 23, characterised in that the wall (17) of chamber (18) has reinforcing inlays for retaining its shape in the non-pressurised state.

25. Rescue capsule according to one of claims 4 to 24, characterised in that the stability-determining tubes (14, 15, 12) are inflated at an overpressure of 0.5 to 1 bar.

26. Rescue capsule according to one of claims 6 to 21, characterised in that the further tube (16) is inflated at an overpressure of 0.05 to 0.1 bar.

## Revendications

1. Utilisation d'un module redressable par gonflage, pouvant se fermer sur tout le tour, comportant un sol gonflable et une construction formant toit et paroi, dans laquelle au moins une personne peut être logée et évacuée en utilisant une fixation se trouvant sur le module, pour le transport de blessés par voie terrestre, le blessé étant couché sur et attaché à un sol formant au moins une couchette, ce sol étant muni d'un système d'absorption des chocs.

2. Utilisation d'un module redressable par gonflage, pouvant se fermer sur tout le tour, comportant un sol gonflable et une construction formant toit et paroi, dans laquelle au moins une personne peut être logée et évacuée en utilisant une fixation se trouvant sur le module, pour le transport de blessés par voie terrestre, le blessé étant couché sur et attaché à au moins une couchette posée sur le sol, le sol étant pourvu d'un système d'absorption des chocs.

3. Utilisation selon la revendication 1 ou 2, selon laquelle le module redressé pour l'évacuation est transporté en étant saisi sur son côté supérieur et en suspension.

4. Module de sauvetage se composant
- d'un sol (1) gonflable, pourvu d'une partie de bord (2) élevée, et formant au moins une couchette, auquel des fixations sont fixées pour le maintien d'au moins un blessé,
- d'une structure formant toit et paroi comportant des éléments porteurs (6) étançonnés dans le sol (1), qui forme avec le sol(1) le module fermé, et dans laquelle est disposée au moins une ouverture fermable, et
- d'une fixation (7) appliquée au module pour son transport,
caractérisé en ce que la partie de bord élevée du sol (1,1') comporte une disposition de tuyaux souples (14, 15) déterminant la stabilité et est reliée à un système d'absorption de chocs qui fait saillie sous le sol (1, 1'), et qui est compressible sous le poids du module de sauvetage.

5. Module de sauvetage se composant
- d'un sol(1) gonflable, muni d'une partie de bord (2) élevée, sur lequel est posée au moins une couchette et auquel sont fixées des fixations pour le maintien d'au moins un blessé,
- d'une structure formant toit et paroi comportant des éléments porteurs (6) étançonnés dans le sol (1) qui forme avec le sol (1) le module fermé et dans laquelle est disposée au moins une ouverture fermable, et
- d'une fixation (7) appliquée au module pour son transport,
caractérisé en ce que la partie de bord élevée du sol (1, 1') comporte une disposition de tuyaux souples (14, 15) déterminant la stabilité et est reliée avec un système d'absorption des chocs qui fait saillie sous le sol (1, 1'), qui est compressible sous le poids du module de sauvetage.

6. Module de sauvetage selon la revendication 4 ou 5, caractérisé en ce que la partie de bord élevée du sol (1, 1') comporte un autre tuyau souple (16) de diamètre plus grand, qui n'est gonflé qu'avec une légère surpression et qui est largement compressible sous le poids du module de sauvetage.

7. Module de sauvetage selon la revendication 5 ou 6, caractérisé en ce que l'autre tuyau souple (16) entoure la disposition de tuyaux souples (14, 15) vers le bas et latéralement vers l'extérieur.

8. Module de sauvetage selon l'une des revendications 4 à 7, caractérisé en ce que la fixation (7) est disposée sur le côté supérieur du module pour son transport en suspension.

9. Module de sauvetage selon l'une des revendications 4 à 8, caractérisé en ce que les parties de bord (2) élevées du sol (1) sont formées par un tuyau souple périphérique, dont le diamètre dépasse largement la hauteur du sol (1).

10. Module de sauvetage selon l'une des revendications 4 à 9, caractérisé en ce que le sol (1) présente une forme polygonale.

11. Module de sauvetage selon l'une des revendications 4 à 10, caractérisé en ce que la structure formant toit et paroi est agencée en forme d'arc et présente un point culminant au milieu.

12. Module de sauvetage selon l'une des revendications 4 à 11, caractérisé en ce que les éléments porteurs (6) de la structure formant toit et paroi sont gonflables.

13. Module de sauvetage selon l'une des revendications 4 à 12, caractérisé en ce que le sol (1) se compose d'une multiplicité de chambres.

14. Module de sauvetage selon l'une des revendications 4 à 13, caractérisé par un dispositif de commande automatique de gonflage pour le gonflage automatique de toutes les parties gonflables après actionnement d'un mécanisme de déclenchement.

15. Module de sauvetage selon l'une des revendications 4 à 14 caractérisé par des couchettes moulées dans le sol et comportant des cales d'appui gonflables au choix pour le réglage d'inclinaisons différentes de la partie supérieure du corps et, le cas échéant, de la partie inférieure du corps du/de la blessé(e).

16. Module de sauvetage selon l'une des revendications 4 à 15, caractérisé par des fixations pour des matériels et instruments de première nécessité.

17. Module de sauvetage selon la revendication 16, caractérisé en ce que les matériels de premières nécessité et, le cas échéant, les possibilités de couchage contenues sont modulés en fonction de cas d'utilisation spécifiques.

18. Module de sauvetage selon l'une des revendications 4 à 17, caractérisé en ce que les parois sont revêtues d'un matériau isolant.

19. Module de sauvetage selon l'une des revendications 4 à 18 caractérisé par un sol gonflable (1), qui se compose de deux couches parallèles (3, 4) et d'un tissu de séparation (5) disposé entre elles.

20. Module de sauvetage selon l'une des revendications 4 à 19 caractérisé en ce qu'avant d'être redressé il est logé à l'état plié dans un conteneur séparé fermé.

21. Module de sauvetage selon l'une des revendications 4 à 20, caractérisé en ce que la disposition de tuyaux souples déterminant la stabilité est formée par deux tuyaux souples (14, 15) disposés l'un sur l'autre avec un diamètre sensiblement identique, les tuyaux souples (14, 15) étant reliés ensemble, le tuyau souple supérieur (15) portant la structure formant toit et paroi (12 et 13) et le tuyau souple inférieur (14) le sol (1').

22. Module de sauvetage selon l'une des revendications 4 à 21, caractérisé en ce que en-dessous du sol (1') et de la disposition de tuyaux souples (14, 15), est ménagée une chambre (18) sans surpression avec une paroi flexible (17), qui est pourvu d'une multiplicité d'ouvertures de sortie de l'air (20), qui permettent une libération rapide de l'air enfermé dans la chambre (18) sous le poids du module de sauvetage.

23. Module de sauvetage selon la revendication 22 caractérisé en ce que la paroi (17) de la chambre (18) est alourdie sur son côté inférieur par un poids (19).

24. Module de sauvetage selon la revendication 22 ou 23, caractérisé en ce que la paroi (17) de la chambre (18) comporte des dispositifs de renforcement maintenant la forme dans un état exempt de pression.

25. Module de sauvetage selon l'une des revendications 4 à 24 caractérisé en ce que des tuyaux souples (14, 15, 12) déterminant la stabilité sont gonflés avec une surpression de l'ordre de 0,5 à 1 bar.

26. Module de sauvetage selon l'une des revendications 6 à 21 caractérisé en ce que l'autre tuyau souple (16) est gonflé avec une surpression de l'ordre de 0,05 à 0,1 bar.
